# EUROPEAN PATENT SPECIFICATION

(11) **EP 3 345 736 B1**
(45) Date of publication and mention of the grant of the patent: **01.05.2019**
(21) Application number: 17150443.4
(22) Date of filing: 05.01.2017
(51) Int. Cl.: B29C 43/24, B29C 43/28, B29C 43/30, B29L 30/00, B29C 43/46

(54) **CALENDER MACHINE FOR MANUFACTURING LAMINATED PRODUCTS SUCH AS RUBBER-COATED TEXTILE OR METAL FABRICS**
KALANDRIERMASCHINE ZUR HERSTELLUNG VON MEHRSCHICHTIGEN PRODUKTEN WIE ELASTOMERBESCHICHTETEN TEXTIL- ODER METAL-GEWEBE
MACHINE DE CALANDRAGE POUR LA FABRICATION DE PRODUITS MULTICOUCHES COMME DE TISSUS TEXTILES OU MÉTALLIQUES REVÊTUS DE CAOUTCHOUC.

(43) Date of publication of application: 11.07.2018
(73) Proprietor: Rodolfo Comerio Srl, 21058 Solbiate Olona (VA) (IT)
(72) Inventor: COMERIO, Carlo, 21058 Solbiate Olona (VA) (IT)
(74) Representative: Zardi, Marco

(56) References cited:
- EP-A1- 0 560 142
- DE-A1-102013 206 640
- DE-A1-102015 204 265
- DE-B- 1 210 979
- US-A- 1 989 038
- DATABASE WPI Week 201219 Thomson Scientific, London, GB; AN 2012-C94415 XP002771422, -& CN 102 357 970 A (WUXI DOUBLE ELEPHANT RUBBER PLASTIC MECH) 22 February 2012 (2012-02-22)

## Description

### Field of application

The invention relates to the field of calender machines for applying an elastomer over a substrate and for manufacturing laminated or coupled products such as, for example, rubber-coated textile or metal fabrics, where the fabric is joined to a layer of elastomer or enclosed between two layers of elastomer.

### Prior art

Known products which are generally referred to as "laminated products" comprise a substrate coated on at least one side with a layer of elastomer. For example these products include so-called rubber-coated textile or metal fabrics comprising a textile or metal fabric substrate, coated on both sides with a layer of natural rubber or, more often, of synthetic rubber.

Rubber-coated textile or metal fabrics are used for example for the manufacture of liners of tyres, conveyor belts, drive belts, etc. For easier illustration, the term of rubber-coated fabrics will be used hereinbelow to refer to these products.

The above mentioned laminated products are manufactured continuously on specially designed calender machines, with a width generally ranging between one metre and three metres.

The calender machines for this purpose comprise a group of cylinders which, in turn, typically includes two (generally intermediate) cylinders, termed working cylinders, working in direct contact with the substrate, and one or two counter-cylinders (at the ends) arranged to distribute one or two elastomers in a suitable manner over the surface of the working cylinders. Known calenders for applying elastomer material onto a substrate are disclosed for example in DE12 10 979 B or in EP 0 560 142 A.

Said cylinders have parallel axes and the working cylinders are located on opposite sides of the substrate. For example, in a preferred embodiment, the substrate travels horizontally tangent to the two working cylinders and hence an upper working cylinder and a lower working cylinder relative to the substrate can be identified.

A clearance for passage of the substrate, also termed passage gap, is defined between the two working cylinders.

The machine comprises a first adjustment device which comprises a position control system, normally hydraulic, and which is able to displace a movable working cylinder (for example the upper one) according to an adjustment direction, away from or toward the other working cylinder, so as to adjust the gap. For this purpose, the movable working cylinder may travel along a sliding plane, back and forth in the aforementioned adjustment direction.

Each of the two counter-cylinders, on the other hand, is adjacent and counter-rotating relative to a respective working cylinder. The task of each counter-cylinder is essentially to plasticise and calender the elastomer, in the form of a sheet of uniform thickness, over the surface of the respective working cylinder.

In this way the working surface of the cylinders is "rubberized" and allowed to transfer one or two elastomers onto the substrate.

Each elastomer is fed into a narrow space between a counter-cylinder and a working cylinder. The counter-cylinder is also movable and is associated with a second adjustment device, generally also of the hydraulic type.

During operation, said counter-cylinder is governed essentially by means of a position control system; in other words said second adjustment device controls the gap between the counter-cylinder and the working cylinder. Consequently, also the thrust between the counter-cylinder and the working cylinder is regulated to obtain the desired plasticization and calendering of the elastomer.

The design of such a machine poses a series of technical challenges which are still open. In particular, the process must be carefully adjusted in order to obtain the desired features of the end product.

Firstly, the gap between the counter-cylinder and the working cylinder must be set carefully, by means of said second adjustment device acting on the counter-cylinder, to obtain uniform calendering of the elastomer to the desired thickness, while counteracting at the same time the reactive thrust of the elastomeric mass.

Said reactive thrust is of a considerable magnitude, typically of the order of 300 kg (about 3 kN) for each centimetre of width of the elastomer produced, and in some circumstances it may be significantly higher reaching up to 900 kg (about 9 kN), and must be suitably counteracted by the working cylinder supports. The width of the elastomer usually ranges from 100 to 300 cm which means the thrust is generally from 30,000 to 270,000 kg (about 3 ·10⁵ - 27 ·10⁵ N).

Second, the gap between the two working cylinders must be set with a high precision: too large a gap does not allow proper application of the elastomer (for example it does not allow the elastomer to penetrate between the threads of a fabric substrate) and delivers a product of poor quality, while too small a gap would cause an excessive thrust and, consequently, rejection of part of the elastomer with the risk of damaging the product. Moreover, the gap between the working cylinders should be quickly and continuously regulated for adaptation to the current conditions of the elastomer which have a certain variability.

In order to understand the complexity of the process and its response to the various parameters, the following can be considered for example.

A reduction in the thickness of the elastomer produced during the preceding calendering operation (by means of the counter-cylinder) brings the elastomer away from the substrate, and vice versa an increase in the thickness brings the elastomer toward the substrate. This may happen for example when a system for automatically and continuously adjusting the thickness of the elastomer produced between counter-cylinder and working cylinder is not provided, or does not operate properly.

A reduction in the temperature of one of the two working cylinders results in a reduction in the diameter of said cylinder and brings the elastomer away from the substrate; on the other hand, an increase in the temperature brings the elastomer closer to the substrate. This may happen for example when feeding of the material between the counter-cylinder and the working cylinder is not constant and uniform over the whole width and, as such, alternately increases the mass of elastomer material between the cylinders, with consequent cooling thereof, and vice versa.

An error in rotation of one of the two working cylinders, which may be caused for example by a construction defect of the cylinder or of a support bearing of the cylinder, results in a continuous movement of the elastomer away from and toward the substrate. This may happen in absence of a proper periodic maintenance of the cylinder groups of the calender machine.

For these reasons, it is preferred in the prior art to keep the working cylinders slightly more open, i.e. more distanced, than the optimum value, in order to work with a certain safety margin.

A drawback of the prior art calender machines is that control of the working cylinders is based substantially on a position adjustment only, i.e. by detecting and adjusting the passage gap between said two cylinders. This position control, however, constitutes an indirect system of managing the penetration of the elastomer into the substrate, which ultimately depends on the coupling thrust (i.e. the pressure) exerted by the working cylinders on the substrate. It has been recognized that this position control, being of an indirect nature, does not always manage to maintain a precise and constant coupling thrust, and the fluctuations in the coupling thrust may have a negative impact on the product quality.

A more precise control would require direct measurement and adjustment of the coupling thrust present between the two working cylinders, i.e. the thrust exerted on the substrate. So far, however, it has not been possible to provide a convenient system for direct control of the coupling thrust for the following reasons.

The position of the movable upper working cylinder and counter-cylinder in the calender is such that the adjustment direction of the movable working cylinder and the direction of the thrust of the counter-cylinder are concurrent, resulting in the thrust of the counter-cylinder acting essentially in a perpendicular manner on the sliding surface of the movable working cylinder.

Consequently, the adjusting device of the passage gap of the movable working cylinder must overcome the sliding friction generated by the thrust of the counter-cylinder on the respective moving surface. The adjustment is further complicated by the fact that the static friction coefficient and dynamic friction coefficient, as is known, are different.

In these conditions, taking into account that the significant thrust transmitted by the counter-cylinder must be managed, a precise and reliable control based on measurement of the coupling thrust cannot be implemented, and one must rely on a position control of the gap between the working cylinders.

The prior art discloses manufacturing said moving surface from a material with a low friction coefficient such as steel having a sintered tin-lead-bronze powder coated with a PTFE matrix. This measure reduces the aforementioned drawbacks, but cannot solve them and, therefore, is not fully satisfactory.

### Summary of the invention

The invention aims to overcome the limitations and drawbacks of the prior art which have been illustrated above.

The invention, more particularly, deals with the problem of improving control of penetration of the elastomer into the substrate by means of adjustment of the coupling thrust between the working cylinders, in a cylinder group for manufacturing elastomer-coated laminated products such as rubber-coated textile or metal fabrics.

This object is achieved with a calender machine comprising a group of cylinders for applying an elastomer over a substrate, wherein said group of cylinders comprises:
a first working cylinder and a second working cylinder, which are situated opposite each other relative to the substrate and define a passage gap for said substrate;
a first adjustment device acting on said first working cylinder and able to displace said first cylinder along an adjustment direction away from or toward the second working cylinder, adjusting said passage gap;
at least a first counter-cylinder for calendering and spreading an elastomer over the surface of the first working cylinder, said first counter-cylinder being adjacent to and counter-rotating relative to said first working cylinder;
a second adjustment device acting on said first counter-cylinder and able to impart a thrusting force of said first counter-cylinder in a predetermined direction toward said first working cylinder, and adjust a gap existing between said first counter-cylinder and said first working cylinder;
wherein said first and second working cylinders generate a thrust for coupling the elastomer on the substrate;
said calender machine being characterized in that:
   it comprises a hydrostatic support for said first working cylinder, said support being slidable in the said adjustment direction and being able to support hydrostatically said thrust from the first counter-cylinder.

Advantageously the calender machine comprises a control system and is further characterized in that said control system allows managing the first adjustment device acting on said first working cylinder by adjusting the coupling thrust between said working cylinders.

More advantageously the control system, acting on the first adjustment device, provides at least two modes of operation:
a) position control of the gap present between said first working cylinder and said second working cylinder (also called distance control);
b) direct control of the coupling thrust exerted by said first working cylinder on the substrate.

Preferably the control system can operate selectively in accordance with one of said modes a) or b), or in a combined manner using both said modes a) + b). In a preferred embodiment the most appropriate mode of operation is selected by an operator.

The terms "position control" denote a control system which detects with at least one suitable sensor the distance between the two working cylinders (i.e. the width of the gap), compares it with a target value, and intervenes by correcting a deviation between the measured value and the target value.

The terms "coupling thrust control" denote a control system which detects the amount of the thrust (or pressure) between the cylinders and, consequently, intervenes directly by varying the thrust exerted by the adjustment device in order to keep the thrust to a target value. For example a thrust control system intervenes by modifying the pressure of the hydraulic circuit of the adjustment device, so as to transmit more or less force to the movable cylinder, without necessarily causing a displacement of the cylinder itself and a variation of the gap.

In the combined control mode, the control system receives at least one signal corresponding to the width of the gap (position) and at least another signal corresponding to the thrust and calculates consequently the variation of position and/or thrust to be imparted to the movable working cylinder by means of the respective adjustment device.

Advantageously, the control system is configured to maintain a constant coupling thrust between the working cylinders. The thrust may be kept constant in accordance with a value set by the operator depending on the specific processing operation.

The term "hydrostatic support" denotes a support in which the axial load transferred to the support is absorbed by a fluid having a suitable pressure, for example oil.

Preferably, said hydrostatic support defines a sliding surface. According to this embodiment, the support surface may also be called a "hydrostatic plane".

More particularly, said sliding hydrostatic plane preferably comprises a fixed base and a movable thrust-bearing plane. Said thrust-bearing plane is movable in a sliding direction. An axial load transferred to said thrust-bearing plane is borne by an oil film between said thrust-bearing plane and said base. Advantageously, the thickness of said oil film remains constant upon a variation of the pressure. Preferably, the oil is supplied and kept under pressure by a pump.

Further features of the invention are defined in the dependent claims.

The hydrostatic support manages to withstand very high axial loads without generating significant friction in the directions of the sliding movements. In other words, the hydrostatic support creates a sliding surface which is substantially friction-free, but at the same time is able to withstand the thrust of the counter-cylinder. The axial load on the thrust-bearing plane is counterbalanced by the oil under pressure, while sliding of the thrust-bearing plane relative to the base is substantially friction-free since the thrust-bearing surface "floats" on a film of oil.

The invention, consequently, has the great advantage of allowing control of the movable working cylinder based on the direct adjustment of the coupling thrust acting on the substrate. This is made possible because the adjustment device acting on the movable working cylinder does not have to overcome the noticeable sliding friction caused by the thrust of the counter-cylinder. Also the position control system benefits from this advantage, because it may intervene more regularly.

The invention allows the implementation of a more precise control of the working cylinder, which can act continuously in order to keep a constant coupling thrust. The invention allows to realize a calender machine which is more effective in the continuous control of the coupling process of the elastomer and, ultimately, can ensure a uniform and constant product quality which cannot be achieved by the calender machines of the prior art, this being the main aim of said calender machines.

The invention is applied preferably to machines for manufacturing rubber-coated textile or metal fabrics.

The advantages of the invention will emerge more clearly with the aid of the following description relating to a preferred embodiment.

### Brief description of the figures

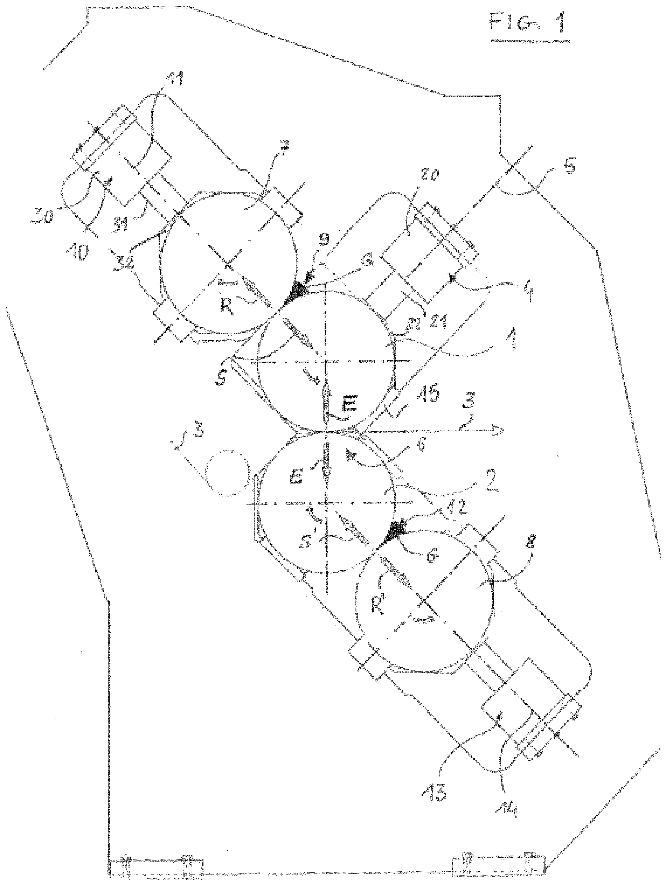

Fig. 1 shows a schematic cross-sectional view of a cylinder group of a calender machine for rubber-coated textile or metal fabrics according to an embodiment of the invention.

### Detailed description

Fig. 1 shows a cylinder group of calender machine for rubber-coated textile or metal fabrics, cross-sectioned along a plane perpendicular to the axis of the cylinders.

The cylinder group comprises a first working cylinder 1 and a second working cylinder 2 which are situated opposite each other relative to a substrate 3 passing between them. In the example shown in Fig. 1 the substrate 3 moves horizontally tangent to the cylinders, but this horizontal condition is not essential for the purposes of the invention.

The group comprises a hydraulic device 4 designed to displace the first working cylinder 1 (movable working cylinder) in an adjustment direction 5, away from or towards the second working cylinder 2. In this way the hydraulic device 4 adjusts a passage gap and thrust zone 6 between said working cylinders 1 and 2. During operation, the substrate 3 passes through the gap 6 between said cylinders 1 and 2.

The cylinders 1 and 2 generate a coupling thrust E on the substrate 3.

The hydraulic device 4 essentially comprises a fixed cylinder 20 and a piston 21. The head of the piston 21 is connected to a support 22 of the working cylinder 1.

The group further comprises a first and a second counter-cylinder 7 and 8 which are adjacent to the first and second working cylinders 1 and 2, respectively. Said counter-cylinders 7 and 8 have the function of calendering and spreading the elastomer material, such as a rubber G, over the surface of the working cylinders 1 and 2.

The working cylinders 1, 2 and the counter-cylinders 7, 8 have parallel axes which, in the example, are perpendicular to the plane of Fig. 1. The sense of rotation of the cylinders is indicated by the arrows in Fig. 1.

The first counter-cylinder 7 is adjacent to and counter-rotates relative to the first working cylinder 1, defining a first space 9 into which a first quantity of rubber G is fed. The counter-cylinder 7 is movable and is associated with a hydraulic thrust device 10 which imparts a thrust S directed along an axis 11 towards the first working cylinder 1.

As a result of this thrust S, the rubber fed into the space 9, which makes contact with the surfaces of the cylinders 1 and 7, is plasticized and calendered uniformly over the surface of the working cylinder 1. The figure indicates also the reaction R produced on the counter-cylinder 7 which is equal to and opposite to the thrust S.

The hydraulic thrust device 4 essentially comprises a fixed cylinder 30 and a piston 31 which is movable in the direction 11. The head of the piston 31 is connected to a support 22 of the counter-cylinder 7.

The second counter-cylinder 8 is adjacent to the second working cylinder 2 and operates substantially in the same manner, calendering and depositing rubber onto the surface of the second working cylinder 2.

In greater detail, said counter-cylinder 8 defines a second space 12 for a second quantity of rubber G and is associated with a respective second hydraulic thrust device 13 (similar to the already described device 10). Said device 13 urges the second counter-cylinder 8 toward the second working cylinder 2 in the direction of a thrust axis 14. The figure shows the respective thrust S' and the reaction R'. The thrust axes 11 and 14 may be parallel or non-parallel according to different embodiments.

During operation the rubber, which is fed into the spaces 9 and 12, is calendered and spread over the surface of the working cylinders 1 and 2 which then apply the rubber on both sides of the substrate 3 while passing through the gap and thrust zone 6.

In some embodiments, if required, two elastomers may be used, namely the counter-cylinders 7 and 8 may apply respectively, a first elastomer and a second elastomer onto the substrate. In other embodiments of the invention a single elastomer may be used.

The calender comprises a control system which governs the process and in particular the devices 4, 10 and 13 acting on the movable working cylinder 1 and on the counter-cylinders 7 and 8.

The substrate 3 is preferably a fabric. In some applications, said substrate 3 is a textile or metal fabric having only the warp (i.e. with no weft) and the space between the warp yarns is filled by the rubber.

The group of cylinders also comprises a hydrostatic sliding support 15 on which the first working cylinder 1 rests. Said hydrostatic sliding support 15 supports the thrust S imparted by the device 10 and at the same time allows the movement of the cylinder in the adjustment direction 5.

The hydrostatic support 15 comprises essentially a base fixed to the frame of the cylinder group and a movable thrust-bearing plane (also called slider) which is slidable, relative to the base, in the direction 5, so as to allow the desired adjusting movement of the cylinder 1. An axial load on said thrust surface is withstood by a film of oil under pressure situated between the base and the said surface, said oil film having a constant thickness upon a variation in the pressure.

Advantageously, the adjustment direction 5 and the direction 11 of the thrust S are perpendicular or substantially perpendicular to each other, when seen on a plane perpendicular to the axes of the cylinders, such as the plane of Fig. 1. As a result of this arrangement, the thrust S is a perpendicular thrust for said hydrostatic support 15.

It can be understood that the use of the hydrostatic support 15 facilitates greatly the function of the device 4. In fact, the thrust S is supported by the hydrostatic support 15, but said hydrostatic surface, at the same time, offers minimum resistance to a sliding action along the adjustment direction 5. It can be said that the hydrostatic support 15 offers substantially no friction. Moreover, the hydrostatic surface does not have the marked difference between static friction and dynamic friction, which is typical of sliding surfaces with sliding friction.

The device 4 may be managed with a position control system which adjusts the gap 6 and/or direct control of the thrust E. The position control system essentially aims to maintain a target value of the gap 6 (distance between the cylinders 1 and 2) and operates measuring the current value of the gap 6 and displacing the cylinder 1 so as to keep the gap 6 at the target value. Control of the thrust E made possible by the invention adjusts directly the magnitude of the thrust E, which is controlled for example by means of the oil pressure in the hydraulic device 4.

It should be noted that the position control system is improved by the present invention, since it may act more promptly since it is no longer subject to the thrust S which is now absorbed by the hydrostatic support 15.

The invention achieves the aforementioned objects providing more precise control of the coupling thrust between the cylinders 1 and 2 and, consequently, penetration of the elastomer (or elastomers) into the substrate.

## Claims

1. Calender machine comprising a group of cylinders for applying an elastomer on a substrate (3), wherein said group of cylinders comprises:
a first working cylinder (1) and a second working cylinder (2), which are situated opposite each other relative to the substrate (3) and define a passage gap (6) for said substrate (3);
a first adjustment device (4) acting on said first working cylinder (1) and able to displace said first cylinder (1) along an adjustment direction away from or towards the second working cylinder (2), adjusting said passage gap (6);
at least a first counter-cylinder (7) for calendering and spreading an elastomer over the surface of the first working cylinder (1), said first counter-cylinder (7) being adjacent to and counter-rotating relative to said first working cylinder (1);
a second adjustment device (10) acting on said first counter-cylinder and able to impart a thrusting force (S) of said first counter-cylinder in a predetermined direction towards said first working cylinder and to adjust a gap existing between said first counter-cylinder and said first working cylinder;
wherein said first and second working cylinders (1, 2) impart to the substrate (3) a thrust (E) for coupling the elastomer on the substrate (3);
said calender machine being **characterized by**:
comprising a hydrostatic support (15) for said first working cylinder (1), said support being slidable in the adjustment direction (5) and being able to support hydrostatically said thrust (S) from the first counter-cylinder.

2. Calender machine according to claim 1, comprising a control system and **characterized in that** said system allows governing said first adjustment device (4) acting on said first working cylinder (1) by means of a direct control of the coupling thrust (E) between the working cylinders.

3. Calender machine according to claim 2, **characterized in that** said control system of the first adjustment device (4) has the following modes of operation:
- position control of the gap between said first working cylinder (1) and said second working cylinder (2);
- direct control of the coupling thrust (E) exerted by said first working cylinder (1) on the substrate;
and wherein the control system can selectively operate with one of said modes of operation or in a combined manner using both said modes.

4. Calender machine according to claim 2 or 3, **characterized in that** said control system is configured to maintain a constant coupling thrust between the working cylinders.

5. Calender machine according to any one of the preceding claims, wherein said hydrostatic support (15) defines a sliding plane which is substantially perpendicular to the direction of said thrusting force (S).

6. Calender machine according to claim 5, wherein said hydrostatic support comprises a base and a thrust-bearing plane which is slidable along said adjustment direction (5).

7. Calender machine according to claim 6, wherein said thrust-bearing plane is perpendicular or substantially perpendicular to the direction of said thrusting force.

8. Calender machine according to any one of the preceding claims, also comprising a second counter-cylinder (8) for calendering and spreading the elastomer on the surface of the second working cylinder (2)

## Patentansprüche

1. Kalandermaschine mit einer Gruppe von Zylindern zum Aufbringen eines Elastomers auf ein Substrat (3), wobei die Gruppe von Zylindern umfasst:
einen ersten Arbeitszylinder (1) und einen zweiten Arbeitszylinder (2), die sich relativ zu dem Substrat (3) gegenüberliegen und einen Durchlassspalt (6) für das Substrat (3) definieren;
eine erste Einstellvorrichtung (4), die auf den ersten Arbeitszylinder (1) wirkt und den ersten Zylinder (1) entlang einer Einstellrichtung von dem zweiten Arbeitszylinder (2) weg oder zu diesem hin verstellen kann, um den Durchlassspalt (6) einzustellen;
mindestens einen ersten Gegenzylinder (7) zum Kalandrieren und Ausbreiten eines Elastomers über die Oberfläche des ersten Arbeitszylinders (1), wobei der erste Gegenzylinder (7) benachbart zu dem ersten Arbeitszylinder (1) ist und sich relativ zu diesem gegenläufig dreht;
eine zweite Einstellvorrichtung (10), die auf den ersten Gegenzylinder einwirkt und in der Lage ist, eine Schubkraft (S) des ersten Gegenzylinders in einer vorbestimmten Richtung auf den ersten Arbeitszylinder zu übertragen und einen zwischen dem ersten Gegenzylinder und dem ersten Arbeitszylinder vorhandenen Spalt einzustellen;
wobei der erste und der zweite Arbeitszylinder (1, 2) dem Substrat (3) einen Schub (E) zum Koppeln des Elastomers an das Substrat (3) verleihen;
wobei die Kalandermaschine **gekennzeichnet ist durch**:
das Vorhandensein einer hydrostatischen Stütze (15) für den ersten Arbeitszylinder (1), wobei die Stütze in der Einstellrichtung (5) verschiebbar ist und den Schub (S) vom ersten Gegenzylinder hydrostatisch abstützen kann.

2. Kalandermaschine nach Anspruch 1, umfassend ein Kontrollsystem und **dadurch gekennzeichnet, dass** das System das Steuern der ersten Einstellvorrichtung (4), die auf den ersten Arbeitszylinder (1) wirkt, mittels einer direkten Kontrolle des koppelnden Schubs (E) zwischen den Arbeitszylindern erlaubt.

3. Kalandermaschine nach Anspruch 2, **dadurch gekennzeichnet, dass** das Kontrollsystem der ersten Einstellvorrichtung (4) die folgenden Betriebsarten aufweist:
- Positionskontrolle des Spalts zwischen dem ersten Arbeitszylinder (1) und dem zweiten Arbeitszylinder (2);
- direkte Kontrolle des koppelnden Schubs (E), der von dem ersten Arbeitszylinder (1) auf das Substrat ausgeübt wird;
und wobei das Kontrollsystem wahlweise mit einer der Betriebsarten oder auf kombinierte Weise unter Verwendung dieser beiden Betriebsarten arbeiten kann.

4. Kalandermaschine nach Anspruch 2 oder 3, **dadurch gekennzeichnet, dass** das Kontrollsystem konfiguriert ist, um einen konstanten koppelnden Schub zwischen den Arbeitszylindern aufrechtzuerhalten.

5. Kalandermaschine nach einem der vorhergehenden Ansprüche, wobei die hydrostatische Stütze (15) eine Gleitebene definiert, die im Wesentlichen senkrecht zur Richtung der Schubkraft (S) ist.

6. Kalandermaschine nach Anspruch 5, wobei die hydrostatische Stütze eine Basis und eine Schublagerebene umfasst, die entlang der Einstellrichtung (5) verschiebbar ist.

7. Kalandermaschine nach Anspruch 6, wobei die Schublagerebene senkrecht oder im Wesentlichen senkrecht zur Richtung der Schubkraft ist.

8. Kalandermaschine nach einem der vorhergehenden Ansprüche, ferner umfassend einen zweiten Gegenzylinder (8) zum Kalandrieren und Ausbreiten des Elastomers auf der Oberfläche des zweiten Arbeitszylinders (2)

## Revendications

1. Machine de calandrage comprenant un groupe de cylindres destinés à appliquer un élastomère sur un substrat (3), où ledit groupe de cylindres comprend :
un premier cylindre de travail (1) et un deuxième cylindre de travail (2), lesquels sont situés opposés l'un à l'autre par rapport au substrat (3) et définissent un espace de passage (6) pour ledit substrat (3) ;
un premier dispositif de réglage (4) agissant sur ledit premier cylindre de travail (1) et pouvant déplacer ledit premier cylindre (1) le long d'une direction de réglage en l'écartant ou en le rapprochant du deuxième cylindre de travail (2), afin d'ajuster ledit espace de passage (6) ;
au moins un premier contre-cylindre (7) destiné à calandrer et étaler un élastomère sur la surface du premier cylindre de travail (1), ledit premier contre-cylindre (7) étant adjacent audit premier cylindre de travail (1) et tournant en sens inverse par rapport à celui-ci ;
un deuxième dispositif de réglage (10) agissant sur ledit premier contre-cylindre et pouvant conférer une force de poussée (S) dudit premier contre-cylindre dans une direction prédéterminée en direction dudit premier cylindre de travail et ajuster un espace existant entre ledit premier contre-cylindre et ledit premier cylindre de travail ;
où lesdits premier et deuxième cylindres de travail (1, 2) exercent sur le substrat (3) une poussée (E) afin de coupler l'élastomère sur le substrat (3) ;
ladite machine de calandrage étant **caractérisée par** :
le fait de comprendre un support hydrostatique (15) destiné audit premier cylindre de travail (1), ledit support pouvant coulisser dans la direction de réglage (5) et pouvant supporter de manière hydrostatique ladite poussée (S) exercée par le premier contre-cylindre.

2. Machine de calandrage selon la revendication 1, comprenant un système de commande et **caractérisée en ce que** ledit système permet de commander ledit premier dispositif de réglage (4) agissant sur ledit premier cylindre de travail (1) au moyen d'une commande directe de la poussée d'accouplement (E) entre les cylindres de travail.

3. Machine de calandrage selon la revendication 2, **caractérisée en ce que** ledit système de commande du premier dispositif de réglage (4) dispose des modes de fonctionnement suivants :
- commande de position de l'espace entre ledit premier cylindre de travail (1) et ledit deuxième cylindre de travail (2) ;
- commande directe de la poussée d'accouplement (E) exercée par ledit premier cylindre de travail (1) sur le substrat ;
et où le système de commande peut fonctionner de manière sélective avec l'un desdits modes de fonctionnement ou d'une manière combinée utilisant lesdits modes à la fois.

4. Machine de calandrage selon la revendication 2 ou 3, **caractérisée en ce que** ledit système de commande est configuré pour maintenir une poussée d'accouplement constante entre les cylindres de travail.

5. Machine de calandrage selon l'une quelconque des revendications précédentes, dans laquelle ledit support hydrostatique (15) définit un plan de coulissement lequel est sensiblement perpendiculaire à la direction de ladite force de poussée (S).

6. Machine de calandrage selon la revendication 5, dans laquelle ledit support hydrostatique comprend une base et un plan de réception de poussée lequel peut coulisser le long de ladite direction de réglage (5).

7. Machine de calandrage selon la revendication 6, dans laquelle ledit plan de réception de poussée est perpendiculaire ou sensiblement perpendiculaire à la direction de ladite force de poussée.

8. Machine de calandrage selon l'une quelconque des revendications précédentes, comprenant également un deuxième contre-cylindre (8) destiné à calandrer et étaler l'élastomère sur la surface du deuxième cylindre de travail (2).
